# EUROPÄISCHE PATENTSCHRIFT

(11) **EP 1 482 745 B1**
(45) Veröffentlichungstag und Bekanntmachung des Hinweises auf die Patenterteilung: **09.04.2008**
(21) Anmeldenummer: 04010494.5
(22) Anmeldetag: 03.05.2004
(51) Int. Cl.: H04Q 3/545, H04L 29/12, H04M 7/00, H04M 3/42, H04Q 3/00

(54) **Verfahren und Anordnung zur Anmeldung eines Endgerätes an einem Kommunikationsknoten**
Method and arrangement for the registration of a terminal at a communication node
Procédé et dispositif pour l'enregistrement d'un terminal à un noeud de communication

(30) Priorität: 28.05.2003 DE 10324372
(43) Veröffentlichungstag der Anmeldung: 01.12.2004
(73) Patentinhaber: SIEMENS AKTIENGESELLSCHAFT, 80333 München (DE)
(72) Erfinder: Berndt, Stefan, 59199 Bönen (DE); Hanna, Thomas, 32758 Detmold (DE); Laux, Thorsten, 33104 Paderborn (DE); Rusitschka, Steffen, 81543 München (DE); Scheering, Christian, Dr., 33689 Bielefeld (DE); Southall, Alan, 81247 München (DE)

(56) Entgegenhaltungen:
- EP-A- 1 014 633
- US-A1- 2002 169 865

## Beschreibung

Die Erfindung betrifft ein Verfahren zur Anmeldung eines Endgerätes an einem Kommunikationsknoten und eine Anordnung zur Ausführung des Verfahrens.

In Kommunikationsnetzwerken sind zumeist eine Vielzahl von Endgeräten und mehrere Kommunikationsknoten angeordnet. In leitungsvermittelten Kommunikationsanordnungen, beispielsweise in ISDN-Systemen, ist dabei jedes Endgerät jeweils an einem Kommunikationsknoten (Vermittlungseinrichtung) fest angemeldet und damit fest zugeordnet. Diese Zuordnung ist dabei durch die Verkabelung gegeben, so dass ein Endgerät, beispielsweise ein Telefon oder ein Telefaxgerät, genau an derjenigen Vermittlungseinrichtung angemeldet ist, mit der dieses Endgerät auch physikalisch verbunden ist. Auch schnurlose Endgeräte sind jeweils bei einem bestimmten Kommunikationsknoten angemeldet, auch wenn sie zeitweise als "Gast" andere Kommunikationsknoten nutzen; dieses Verfahren ist auch als "Roaming" bekannt.

Auch die Endgeräte in Sprachdatennetzen, häufig als Voice-over-IP-Netze (VoIP = Voice-over-Internet-Protokoll) bezeichnet, sind einem der Kommunikationsknoten in dem jeweiligen Sprachdatennetz fest zugeordnet und bei diesem angemeldet. In einem Sprachdatennetz kann jedoch prinzipiell jede Netzwerkkomponente, also jedes Endgerät und jeder Kommunikationsknoten, mit jeder anderen Netzwerkkomponente Daten (insbesondere Sprachdaten) austauschen. Eine feste Zuordnung der Netzwerkkomponenten zueinander, wie sie in den leitungsvermittelten Kommunikationsnetzen aufgrund der Verkabelung gegeben ist, ist in Sprachdatennetzen weder zwingend noch erwünscht. Die Endgeräte in Sprachdatennetzen werden häufig auch als "Clients" bezeichnet, weil sich diese Endgeräte signifikant von leitungsvermittelten Endgeräten unterscheiden. So können Sie beispielsweise als Telefon mit Netzwerkanschluss oder aber auch als Computer mit einer darauf installierten Kommunikationssoftware ausgestaltet sein. Da die Clients in Sprachdatennetzen die Nutzinformationen, also die Sprachdaten, prinzipiell direkt untereinander austauschen können, besteht die Funktion des Kommunikationsknotens in solchen Kommunikationsnetzwerken vorrangig in der Steuerung der Verbindung. Solche Instanzen sind in den Sprachdatennetzen (je nach verwendetem VoIP-Standard) als "Gatekeeper" (gemäß H.323) oder als "Proxy" (gemäß SIP, Session Initiation Protocol) bekannt, da die Funktion dieser Kommunikationsknoten neben der Verbindungs-Initiierung zwischen den Clients auch die Zugangskontrolle zu Übertragungseinrichtungen zu anderen Netzwerken, den sog. Gateways, bildet. Die Entscheidung darüber, welcher Client welchen Kommunikationsknoten in einem Sprachdatennetz verwendet, kann beliebig oft neu getroffen werden, da eine manuelle Anpassung der Verkabelung, also der physikalischen Zuordnung, entfällt und der "Wechsel" eines Endgerätes von einem Kommunikationsknoten zu einem anderen Kommunikationsknoten allein durch einen Abmelde- und einen darauf folgenden Anmeldevorgang erfolgt. Bei der Inbetriebnahme eines Sprachdatennetzes bzw. eines Endgerätes in einem Sprachdatennetz wird dabei zumindest einmalig die Anmeldung des neu zu installierenden Endgerätes bei einem der verfügbaren Kommunikationsknoten manuell durchgeführt.

Aus der Druckschrift EP 1 014 633 A2 Bennefeld at al. "Scalable gatekeepers in an internet telephony system and a method of operation" ist bereits ein Verfahren und Geräte zur Anmeldung eines Endgerätes bei einem einer Vielzahl von Kommunikationsknoten (Gatekeeper) bekannt. Dabei werden anzumeldende Endgeräte einzeln nacheinander durch einen Dienst bei einem geeigneten der Gatekeeper angemeldet.

Bei den bekannten Verfahren und Anordnungen zur Anmeldung eines Endgerätes an einem Kommunikationsknoten hat sich als nachteilig erwiesen, dass aufgrund der manuellen Zuordnung zwischen Endgeräten und Kommunikationsknoten und den damit einhergehenden manuellen Anmeldevorgängen ein hoher und damit auch kostenintensiver Aufwand entsteht. Ein solcher Aufwand muss darüber hinaus nicht nur bei der ersten Inbetriebnahme eines Kommunikationsnetzwerks betrieben werden, sondern entsteht auch bei jeder Änderung in der Struktur des Kommunikationsnetzwerkes. Dies ist beispielsweise dann der Fall, wenn ein Endgerät dem Kommunikationsnetz hinzugefügt oder aus diesem entfernt wird, bei Wechsel oder Ausfall eines Kommunikationsknotens oder aber auch bei einem Umzug eines Endgerätes von einem Kommunikationsknoten zu einem anderen Kommunikationsknoten. Der letztgenannte Wechsel wird beispielsweise häufig vorgenommen, um die Auslastung der einzelnen Kommunikationsknoten untereinander anzugleichen.

Aufgabe der Erfindung ist es, ein Verfahren vorzuschlagen, mit dem der Aufwand zur Konfigurierung eines Kommunikationsnetzwerks vermindert wird, und eine Anordnung vorzuschlagen, in der die Zuordnung von Endgeräten zu Kommunikationsknoten mit geringem manuellen Aufwand verbunden ist.

Die Aufgabe wird für das Verfahren durch die Merkmale des Patentanspruchs 1 und für die Anordnung durch die Merkmale des Patentanspruchs 15 gelöst.

Die Lösung sieht für das Verfahren vor, dass zuerst die Registrierung der Kommunikationsknoten und deren Zugangsparameter in einem Informationsspeicher erfolgt. Danach erfolgt ein Zugriff des Endgerätes auf den Informationsspeicher und in dessen Folge die Übermittlung der Zugangsparameter zumindest eines der Kommunikationsknoten zu dem Endgerät. Schließlich wird das Endgerät anhand der erhaltenen Zugangsparameter bei einem dieser Kommunikationsknoten angemeldet. Durch die Registrierung der Kommunikationsknoten und deren Zugangsparameter in dem Informationsspeicher und die Übermittlung dieser Zugangsparameter zu dem Endgerät kann sich das Endgerät ohne weiteren manuellen Eingriff eines Benutzers bei einem der Kommunikationsknoten anmelden.

Die Lösung sieht für die Anordnung vor, dass in dem Kommunikationsnetzwerk ein Informationsspeicher angeordnet ist, in dem die Kommunikationsknoten mit den jeweiligen Zugangsparametern registriert sind. Das Endgerät umfasst Mittel zum Zugriff auf den Informationsspeicher, wobei die Zugangsparameter geeigneter Kommunikationsknoten durch das Endgerät aus dem Informationsspeicher abrufbar sind, und wobei sich das Endgerät bei einem der geeigneten Kommunikationsknoten anhand der Zugangsparameter anmeldet.

Das Verfahren ist durch die kennzeichnenden Merkmale der abhängigen Patentansprüche 2 bis 14 vorteilhaft ausgestaltet. Die für das Verfahren beschriebenen Vorteile gelten dabei sinngemäß auch für die Anordnung.

In Fällen, in denen als Kommunikationsnetzwerk ein Sprach-Datennetzwerk und als Kommunikationsknoten Gatekeeper verwendet werden, kann das Verfahren für die gebräuchlichen VoIP-Netzwerke verwendet werden. Das gilt insbesondere für die VoIP-Netzwerke nach dem H.323- und dem SIP-Standard, wobei in letzteren die Gatekeeper auch als "Proxies" bzw. "SIP-Proxies" bezeichnet werden. Darüber hinaus kann das Verfahren auch für andere VoIP-Standards verwendet werden, die über funktionale Äquivalente zu Gatekeepern und Proxies verfügen.

Wenn als Endgerät ein Sprachdaten-Endgerät oder ein mit einer Telephonie-Funktion ausgestatteter Computer verwendet wird, lassen sich die bekannten und gebräuchlichen Endgeräte von VoIP-Netzwerken auf einfache Weise den Kommunikationsknoten zuordnen.

Aus der Menge aller registrierten Kommunikationsknoten können aus dem Informationsspeicher die Zugangsparameter der geeigneten Kommunikationsknoten ausgefiltert werden, indem in Schritt a) als Zugangsparameter Angaben über die von dem jeweiligen Kommunikationsknoten unterstützten Kommunikationsprotokolle und/oder Angaben über die Anzahl der jeweils insgesamt anmeldbaren Endgeräte registriert werden. Wenn in Schritt a) die Zugangsparameter Angaben über die Anzahl der derzeit anmeldbaren Endgeräte umfasst, und wenn diese Angaben regelmäßig von den Kommunikationsknoten jeweils zu dem Informationsspeicher übermittelt werden, werden Anmelde-Versuche von Endgeräten bei solchen Kommunikationsknoten, deren Kapazität erschöpft ist, reduziert und/oder vermieden.

Die Übertragung der Zugangsparameter von nicht geeigneten Kommunikationsknoten zu dem Endgerät wird vermieden, indem in Schritt b) beim Zugriff ein Anforderungsprofil des Endgeräts zu dem Informationsspeicher übermittelt wird, und in Schritt c) von dem Informationsspeicher zu dem Endgerät die Zugangsparameter solcher Kommunikationsknoten übermittelt werden, die dem Anforderungsprofil entsprechen.

Die übermittelten Zugangsparameter stehen in dem Endgerät für weitere Anmeldevorgänge zur Verfügung, wenn die in Schritt c) übermittelten Zugangsparameter von dem Endgerät gespeichert werden.

Wenn in Schritt d) die Anmeldung des Endgerätes durch das Endgerät selbst erfolgt, erübrigt sich in dem Kommunikationsnetzwerk der Betrieb einer separaten Anmeldeinstanz.

Eine Redundanz in Bezug auf den Ausfall eines Kommunikationsknotens oder in Bezug auf erfolglose Anmeldeversuche ist gegeben, indem in Schritt c) die Zugangsparameter mehrerer Kommunikationsknoten zu dem Endgerät übermittelt werden, und indem in Schritt d) in den Fällen, in denen die Anmeldung des Endgerätes bei dem ersten dieser Kommunikationsknoten nicht erfolgreich war, solange bei weiteren Kommunikationsknoten, deren Zugangsparameter in Schritt c) gespeichert wurden, wiederholt wird, bis entweder eine erfolgreiche Anmeldung stattgefunden hat, oder alle mit Zugangsparametern von dem Endgerät gespeicherten Kommunikationsknoten abgearbeitet sind.

Wenn in Fällen, in denen alle gespeicherten Kommunikationsknoten abgearbeitet wurden und bei keinem dieser Kommunikationsknoten eine erfolgreiche Anmeldung stattgefunden hat, das Verfahren beginnend mit Schritt b) wiederholt wird, werden zwischenzeitlich den Kommunikationsnetzwerk hinzugefügte Kommunikationsknoten bzw. solche, bei denen wiederum Kapazitäten frei geworden sind, von dem Endgerät aufgefunden und zur Anmeldung genutzt. Diese Anmeldung erfolgt vorteilhaft automatisch, also ohne manuellen Eingriff eines Benutzers oder Administrators.

In derartigen Kommunikationsnetzwerken, in denen die selbsttätige Anmeldung der Endgeräte bei Kommunikationsknoten nicht erwünscht ist, kann die Zuordnung der Endgeräte zu dem Kommunikationsknoten durch eine speziell dafür vorgesehene Instanz, einem Dienst, durchgeführt werden. Dazu werden in einen Speicherbereich des Informationsspeichers Angaben über mehrere Endgeräte des Kommunikationsnetzwerks gespeichert. Durch den Dienst wird anhand der in Schritt a) in dem Informationsspeicher registrierten Kommunikationsknoten und anhand der in dem Speicherbereich gespeicherten Angaben über die Endgeräte die jeweilige Zuordnung der Endgeräte zu dem Kommunikationsknoten vorgenommen. Als Ergebnis der Zuordnung wird zu jedem der Endgeräte jeweils ein bevorzugter Kommunikationsknoten bestimmt. Die Anmeldung der Endgeräte in Schritt d) erfolgt dann jeweils bei dem zugeordneten bevorzugten Kommunikationsknoten.

Der Ausfall desjenigen Kommunikationsknotens, an dem das Endgerät angemeldet ist, kann aufgefangen werden, indem ein zusätzlicher Verfahrensschritt e) hinzugenommen wird. Dieser Verfahrensschritt e) sieht vor, dass die Anmeldung des Endgerätes an einem weiteren derjenigen Kommunikationsknoten, deren Zugangsparameter in Schritt c) übermittelt wurden, erfolgt, wenn der Kommunikationsknoten, an dem das Endgerät angemeldet ist, ausfällt.

Die Funktion eines Endgerätes, beispielsweise Berechtigungen, können durch die Anmeldung eines Benutzers an demjenigen Kommunikationsknoten, an dem das Endgerät angemeldet ist, gesteuert werden.

Eine Basisfunktionalität, beispielsweise für Notrufzwecke, der Endgeräte wird gewährleistet, indem an dem Kommunikationsknoten verschiedene Benutzer mit unterschiedlichen Berechtigungen anmeldbar sind. In Schritt d) wird dann bei der Anmeldung des Endgerätes zusätzlich der Benutzer dieses Endgerätes bei den Kommunikationsknoten angemeldet. Indem ein Standard-Benutzer mit einer Standard-Berechtigung an den Kommunikationsknoten anmeldbar ist, und indem das Endgerät mit dem Standard-Benutzer bei dem Kommunikationsknoten angemeldet ist, solange kein anderer Benutzer über dieses Endgerät an dem Kommunikationsknoten angemeldet ist, ist das Endgerät stets mit dem Nutzungsumfang, der für den Standard-Benutzer definiert ist, verwendbar. Dieser Standard-Nutzungsumfang umfasst dabei zumindest die Notruffunktion.

Ausführungsbeispiele des erfindungsgemäßen Verfahrens sind nachfolgend anhand der Zeichnung erläutert und dienen gleichzeitig der Erläuterung eines Ausführungsbeispiels der erfindungsgemäßen Anordnung.

Dabei zeigt die einzige Figur in schematischer Darstellung ein Kommunikationsnetzwerk mit einem Datennetz, zwei Kommunikationsknoten, zwei Endgeräten und mit einem Informationsspeicher.

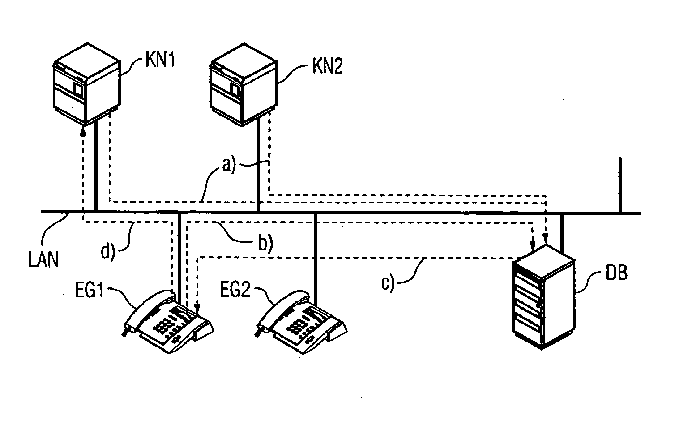

In der Fig. 1 ist ein Kommunikationsnetzwerk gezeigt, in dem als Komponenten Kommunikationsknoten KN1, KN2, Endgeräte EG1, EG2 und ein Informationsspeicher DB angeordnet sind. Diese Komponenten kommunizieren miteinander unter Verwendung eines Datennetzes LAN.

Bei dem Datennetz LAN handelt es sich um ein sog. IP-Netz, also um ein Netzwerk, in dem Komponenten unter Nutzung des Internet-Protokolls (IP) paketvermittelt Daten, insbesondere Sprachdaten, austauschen. Selbstverständlich können anstelle des Datennetzes LAN auch andere Transportmedien für die Daten genutzt werden.

Als Kommunikationsknoten KN1, KN2 werden hier H.323-Gatekeeper eingesetzt, die jeweils für eine Anzahl H.323-unterstützende Endgeräte EG1, EG2 die Anmeldeinstanz bilden und darüber hinaus weitere Funktionen ausüben, auf die im Rahmen dieses Ausführungsbeispiels nicht weiter eingegangen werden soll. Anstelle der H.323-Gatekeeper können - bei Einsatz des SIP-Protokolls oder anderer Kommunikationsprotokolle - SIP-Proxies oder funktionsgleiche Kommunikationsknoten verwendet werden.

Bei den Endgeräten EG1, EG2 handelt es sich um VoIP-Telefone, also um Telephonie-Endgeräte, die zum Einsatz in Sprachdatennetzen ausgebildet sind. Selbstverständlich sind anstelle der als Telephonie-Endgeräte ausgebildeten Clients auch Computer (PC's) mit einer Telephonie-Software (sog. "Soft-Phones") oder andere Kommunikations-Geräte mit einer Sprachdaten-Schnittstelle einsetzbar. Von den dargestellten Endgeräten EG1, EG2 wird im Folgenden das Endgerät EG1 exemplarisch betrachtet.

Bei dem Informationsspeicher DB handelt es sich um eine Datenbank, auf die die Komponenten des Kommunikationsnetzwerkes zugreifen können. Obwohl der Informationsspeicher DB in der Fig. 1 als separates Gerät dargestellt ist, kann die Funktionalität des Informationsspeichers DB auch von anderen Netzwerkkomponenten übernommen werden. Insbesondere ist es auch möglich, dass es sich bei dem Informationsspeicher DB um einen sog. verteilten Informationsspeicher DB handelt, also um eine Datenbank, deren Bestandteile auf verschiedene Netzwerkkomponenten verteilt sind. In dem Kommunikationsnetzwerk dient der Informationsspeicher DB in erster Linie der Speicherung von Daten, die zur Registrierung der Kommunikationsknoten KN1, KN2 dienen, und damit der Speicherung der diesen Kommunikationsknoten KN1, KN2 zugeordneten Zugangsparameter. Abgesehen von diesen Informationen können in dem Informationsspeicher DB jedoch auch andere Informationen gespeichert werden; diese Fähigkeit des Informationsspeichers DB wird bei einer später beschriebenen weiteren Ausführungsform der Erfindung benutzt.

In der Fig. 1 sind die Verfahrensschritte zur Anmeldung des Endgerätes EG1 bei dem Kommunikationsknoten KN1 durch Pfeil-Linien symbolisiert; die Linien sind dazu mit den Bezugszeichen a) bis d) gekennzeichnet.

Die Kommunikationsknoten KN1, KN2 registrieren sich mit ihren Zugangsparametern nach dem Einschalten ("Hochlaufen") bei dem Informationsspeicher DB. Zu den Zugangsparametern der Kommunikationsknoten KN1, KN2 gehört jeweils die Netzwerkadresse der Kommunikationsknoten KN1, KN2 in dem Datennetz LAN, die dem Kommunikationsknoten KN1, KN2 nach jeweils dessen Einschalten zugewiesen wurde. Diese Zuweisung kann dabei statisch oder dynamisch geschehen. Hier wird sie dynamisch nach dem DHCP-Verfahren (DHCP = Dynamic Host Configuration Protocol) vorgenommen; dieses Verfahren ist allgemein bekannt und wird an dieser Stelle nicht weiter vertieft. Zu den übertragenen Zugangsparametern gehören weiterhin die Informationen darüber, wie viele Endgeräte an dem jeweiligen Kommunikationsknoten KN1, KN2 angemeldet werden können und wie viele Endgeräte bei der derzeitigen Auslastung der Kommunikationsknoten KN1, KN2 jeweils noch an diesen angemeldet werden können.

Die letztgenannte Information über die Anzahl der verbliebenen Anmelde-Kapazität ändert sich selbstverständlich nach jeder Anmeldung bzw. Abmeldung eines Endgerätes EG1, EG2. Daher wird diese Angabe von den Kommunikationsknoten KN1, KN2 in regelmäßigen Abständen erneut zu dem Informationsspeicher DB übermittelt. Im vorliegenden Fall ist das Intervall für diese Übermittlungen so gewählt, dass sie dann erfolgt, wenn sich die in dem jeweiligen Kommunikationsknoten KN1, KN2 verbliebene Rest-Kapazität um einen bestimmten Schwellwert (in diesem Beispiel beträgt der Schwellwert 10) gegenüber der letzten Meldung verändert hat. Selbstverständlich können auch andere Intervalle, insbesondere auch Zeitintervalle, gewählt werden. Im Übrigen kann auch vollständig auf die Angaben über die Gesamtkapazität und die Restkapazität der Kommunikationsknoten KN1, KN2 verzichtet werden, weil - wie in diesem Beispiel - bei einer nicht-ausreichenden Restkapazität die Anmeldung eines Endgerätes EG1, EG2 von dem jeweiligen Kommunikationsknoten KN1, KN2 verweigert wird und in Folge dessen das betroffene Endgerät EG1, EG2 einen Anmeldeversuch an einem weiteren der Kommunikationsknoten KN1, KN2 vornimmt.

Selbstverständlich müssen alle Kommunikationsknoten KN1, KN2 Zugriff auf den verwendeten Informationsspeicher DB haben. Im Unterschied zu der hier vorgestellten Ausführungsform ist es jedoch auch möglich, dass in dem Kommunikationsnetzwerk mehrere Informationsspeicher angeordnet sind, und die Kommunikationsknoten KN1, KN2 jeweils einem dieser Informationsspeicher zugeordnet sind.

Der Registrierungsvorgang der Kommunikationsknoten KN1, KN2 ist in der Fig. 1 anhand der mit dem Bezugszeichen a) bezeichneten Pfeile dargestellt.

In dem nächsten Verfahrensschritt, der in der Fig. 1 mit den Bezugszeichen b) visualisiert ist, baut das Endgerät EG1 eine Verbindung zu dem Informationsspeicher DB auf. Dazu ist das Endgerät mit einer Steuereinheit ausgestattet, die mit einem Interface über das Datennetz auf eine Benutzerschnittstelle des Informationsspeichers DB zugreift. Bei dem Zugriff übermittelt das Endgerät EG1 dabei ein Anforderungsprofil, welches die minimalen Anforderungen an einen der gesuchten Kommunikationsknoten KN1, KN2 beschreibt. Dieses Anforderungsprofil umfasst beispielsweise Angaben über die erforderlichen Kommunikationsprotokolle (Sprach-Codecs), Mindestanzahl der verwaltbaren Kommunikationsverbindungen etc.. Für den Verbindungsaufbau zu dem Informationsspeicher DB benötigt das Endgerät EG1, genauso wie die Kommunikationsknoten KN1, KN2, die Netzwerkadresse des Informationsspeichers DB bzw., wenn es sich um einen verteilten Informationsspeicher DB handelt, die Netzwerkadresse eines Einstiegspunktes des verteilten Informationsspeichers DB. Diese Adresse kann in den Netzwerkkomponenten von einem Administrator eingespeichert werden; im vorliegenden Fall ist es jedoch so, dass die Adresse des Informationsspeichers DB beim Einschalten der Endgeräte EG1, EG2 bzw. der Kommunikationsknoten KN1, KN2 diesen mittels Zusatzinformationen des DHCP-Verfahrens übermittelt wird.

Im vorliegenden Ausführungsbeispiel wird davon ausgegangen, dass die in Verfahrensschritt a) von den Kommunikationsknoten KN1, KN2 zu dem Informationsspeicher DB übertragenen Zugangsparameter jeweils die Anforderungen des Anforderungsprofils erfüllen, welches von dem Endgerät EG1 zu dem Informationsspeicher DB in Schritt b) übertragen wurde. In Folge dessen übermittelt der Informationsspeicher DB in Verfahrensschritt c) zu dem Endgerät EG1 die Zugangsparameter beider geeigneter Kommunikationsknoten KN1, KN2.

Das Endgerät EG1 meldet sich nun bei dem Kommunikationsknoten KN1 an; dieser Vorgang ist in der Fig. 1 anhand des mit d) gekennzeichneten Pfeils schematisch dargestellt. Für die Anmeldung ist die Steuereinheit des Endgerätes EG1 mit einer Software ausgerüstet, die die Anmeldung gemäß eines in dem Datennetz vereinbarten Protokolls vornimmt; man spricht diesbezüglich auch von einem implementierten "Protokoll-Stack".

Falls in Schritt d) die Anmeldung des Endgerätes EG1 bei dem Kommunikationsknoten KN1 fehlschlägt, weil beispielsweise der Kommunikationsknoten KN1 zwischenzeitlich seine Kapazitätsgrenze erreicht hat oder ausgefallen ist, baut das Endgerät EG1 eine Verbindung zu einem anderen Kommunikationsknoten, dessen Zugangsparameter von dem Informationsspeicher DB übertragen wurden, auf, um sich bei diesem alternativen Kommunikationsknoten anzumelden. Im vorliegenden Beispiel ist das der Kommunikationsknoten KN2. Dieses Ausweichverfahren ist jedoch nur dann möglich, wenn - wie im vorliegenden Fall - im Verfahrensschritt c) von dem Endgerät EG1 nicht nur die Zugangsparameter des Kommunikationsknotens KN1, sondern auch die des Kommunikationsknotens KN2 gespeichert wurden.

Die Anmeldeversuche werden dabei solange fortgeführt, bis entweder eine erfolgreiche Anmeldung bei einem der Kommunikationsknoten KN1, KN2 stattgefunden hat, oder aber bis alle Kommunikationsknoten KN1, KN2, deren Zugangsparameter in Verfahrensschritt c) übermittelt wurden, abgearbeitet sind. Nach Abarbeitung der in dem Endgerät EG1 gespeicherten Liste mit den Zugangsparametern baut das Endgerät EG1 erneut eine Verbindung zu dem Informationsspeicher DB auf, um erneut ein bzw. das Anforderungsprofil zu übertragen und eine Liste von Zugangsparametern geeigneter Kommunikationsknoten KN1, KN2 abzurufen. Dies geschieht, weil zwischenzeitlich, also nach dem letztmaligen Abruf von Zugangsparametern, beispielsweise ein weiterer, hier nicht dargestellter Kommunikationsknoten, dem Kommunikationsnetzwerk hinzugefügt worden sein kann, oder andere Änderungen in der Struktur des Kommunikationsnetzwerks aufgetreten sein können.

Falls der Kommunikationsknoten KN1 nach einer erfolgreichen Anmeldung des Endgerätes EG1 ausfällt, versucht das Endgerät EG1, sich bei dem Kommunikationsknoten KN2, dessen Zugangsparameter im Verfahrensschritt c) ebenfalls dem Endgerät EG1 übermittelt wurden, anzumelden.

Die Summe aller Zugangsparameter der in dem Informationsspeicher DB registrierten Kommunikationsknoten KN1, KN2 kann als eine erste Informationsmenge betrachtet werden, die im Folgenden PBX-Set genannt wird. Analog zu dem PBX-Set kann in dem Informationsspeicher DB auch eine zweite Informationsmenge gespeichert sein, die im Folgenden EP-Set genannt wird. Das EP-Set (EP = Endpunkte) umfasst Angaben über alle in dem Kommunikationsnetzwerk angeordneten Endgeräte EG1, EG2. Während in der vorstehend beschriebenen Ausführungsform der Erfindung das Endgerät EG1 selbst entscheidet, bei welchem der Kommunikationsknoten KN1, KN2 ein Anmeldeversuch unternommen werden soll, kann in der jetzt betrachteten Ausführungsform auch ein - hier nicht dargestellter - im Kommunikationsnetzwerk angeordneter Zuordnungsdienst diese Entscheidung treffen. Der Zuordnungsdienst kann die Zuordnung von Endgeräten EG1, EG2 zu Kommunikationsknoten KN1, KN2 nach verschiedenen Gesichtspunkten steuern, beispielsweise mit dem Ziel einer gleichmäßigen Auslastung der Kommunikationsknoten KN1, KN2, oder mit dem Ziel, den kostengünstigsten Kommunikationsknoten KN1, KN2 bevorzugt auszulasten etc.. Als Ergebnis dieser Zuordnung bestimmt der Zuordnungsdienst für jedes der Endgeräte EG1, EG2 einen bevorzugten Kommunikationsknoten KN1, KN2. Im Folgenden sei angenommen, dass der Kommunikationsknoten KN1 der bevorzugte Kommunikationsknoten für das Endgerät EG1 ist.

Der Zuordnungsdienst übermittelt nun zu dem Endgerät EG1 die Zugangsparameter des bevorzugten Kommunikationsknotens KN1, woraufhin sich das Endgerät EG1 bei dem Kommunikationsknoten KN1 anmeldet. Alternativ dazu kann der Zuordnungsdienst das Endgerät EG1 auch selbst bei dem Kommunikationsknoten KN1 anmelden und zu dem Endgerät EG1 eine Information darüber übermitteln, dass es nunmehr bei dem Kommunikationsknoten KN1 angemeldet ist.

In einer weiteren Ausführungsform des Kommunikationsnetzwerks melden sich nicht nur Endgeräte EG1, EG2 bei den Kommunikationsknoten KN1, KN2 an, sondern auch die Benutzer der Endgeräte EG1, EG2. Grund dafür ist beispielsweise die Zuteilung von unterschiedlichen Berechtigungen zu unterschiedlichen Benutzern, wobei beispielsweise nur ausgewählte Benutzer kostenpflichtige Extern-Kommunikationsverbindungen nutzen dürfen. Von einem Endgerät EG1, welches an dem Kommunikationsknoten KN1 angemeldet ist, können also beispielsweise nur dann externe Telefongespräche geführt werden, wenn ein Benutzer mit der Berechtigung, externe Telefongespräche zu führen, über das Endgerät EG1 an dem Kommunikationsknoten KN1 angemeldet ist. Um die allgemeine Anforderung zu erfüllen, dass von jedem funktionsfähigen Endgerät EG1, EG2 aus Notrufe abgesetzt werden können, meldet sich das Endgerät EG1 in Verfahrenschritt d) wie beschrieben zunächst selbst an, um dann in dem gleichen Verfahrensschritt einen sog. "Standard-Benutzer" bei den Kommunikationsknoten KN1 anzumelden. Diesem "Standard-Benutzer" ist zumindest die Berechtigung zugeteilt, Notruf-Gespräche zu führen. Wenn sich zu einem späteren Zeitpunkt ein Benutzer mit einer anderen Berechtigung über das Endgerät EG1 bei dem Kommunikationsknoten KN1 anmeldet, wird statt des Standard-Benutzers dieser "reguläre" Benutzer in dem Kommunikationsknoten KN1 mit dem Endgerät EG1 verknüpft, so dass damit das Endgerät EG1 seine volle Funktionalität erlangt. Meldet sich zu einem wiederum späteren Zeitpunkt der "reguläre" Benutzer über das Endgerät EG1 von dem Kommunikationsknoten KN1 ab, wird dem Endgerät EG1 wiederum der Standard-Benutzer zugeordnet.

## Patentansprüche

1. Verfahren zur Anmeldung eines Endgerätes (EG1, EG2) an einem Kommunikationsknoten (KN1, KN2) in einem Kommunikationsnetzwerk,
wobei in dem Kommunikationsnetzwerk mehrere Kommunikationsknoten (KN1, KN2) angeordnet sind, mit folgenden Verfahrensschritten:
a) Registrierung der Kommunikationsknoten (KN1, KN2) und deren Zugangsparameter in einem Informationsspeicher (DB),
b) Zugriff des Endgerätes (EG1, EG2) auf den Informationsspeicher (DB),
c) Übermittlung der Zugangsparameter zumindest eines der Kommunikationsknoten (KN1, KN2) zu dem Endgerät (EG1, EG2), und
d) Anmeldung des Endgerätes (EG1, EG2) anhand der erhaltenen Zugangsparameter bei einem dieser Kommunikationsknoten (KN1, KN2),
**dadurch gekennzeichnet, dass**
durch einen Dienst anhand der in Schritt a) in dem Informationsspeicher (DB) registrierten Kommunikationsknoten (KN1, KN2) und anhand der in dem Speicherbereich gespeicherten Angaben über die Endgeräte (EG1, EG2) die jeweilige Zuordnung der Endgeräte (EG1, EG2) zu den Kommunikationsknoten (KN1, KN2) vorgenommen wird,
dass als Ergebnis der Zuordnung zu jedem der Endgeräte (EG1, EG2) jeweils ein bevorzugter Kommunikationsknoten (KN1, KN2) bestimmt wird, und
dass in Schritt d) die Anmeldung der Endgeräte (EG1, EG2) jeweils bei dem zugeordneten bevorzugten Kommunikationsknoten (KN1, KN2) erfolgt.

2. Verfahren nach Patentanspruch 1,
**dadurch gekennzeichnet,**
**dass** als das Kommunikationsnetzwerk ein Sprach-Datennetzwerk verwendet wird, und
**dass** als Kommunikationsknoten (KN1, KN2) jeweils Gatekeeper benutzt werden.

3. Verfahren nach Patentanspruch 2,
**dadurch gekennzeichnet,**
**dass** als das Endgerät (EG1, EG2) ein Sprachdaten-Endgerät oder ein mit einer Telephonie-Funktion ausgestatteter Computer verwendet wird.

4. Verfahren nach einem der vorhergehenden Patentansprüche,
**dadurch gekennzeichnet,**
**dass** in Schritt a) als die Zugangsparameter Angaben über die von dem jeweiligen Kommunikationsknoten (KN1, KN2) unterstützten Kommunikationsprotokolle und / oder Angaben über die Anzahl der jeweils insgesamt anmeldbaren Endgeräte (EG1, EG2) registriert werden.

5. Verfahren nach einem der vorhergehenden Patentansprüche,
**dadurch gekennzeichnet,**
**dass** in Schritt a) die Zugangsparameter Angaben über die Anzahl der aktuell anmeldbaren Endgeräte (EG1, EG2) umfasst, und
**dass** diese Angaben regelmäßig von den Kommunikationsknoten (KN1, KN2) jeweils zu dem Informationsspeicher (DB) übermittelt werden.

6. Verfahren nach einem der vorhergehenden Patentansprüche,
**dadurch gekennzeichnet,**
**dass** in Schritt b) beim Zugriff ein Anforderungsprofil des Endgerätes (EG1, EG2) zu dem Informationsspeicher (DB) übermittelt wird, und
**dass** in Schritt c) von dem Informationsspeicher (DB) zu dem Endgerät (EG1, EG2) die Zugangsparameter derjenigen Kommunikationsknoten (KN1, KN2) übermittelt werden, die dem Anforderungsprofil entsprechen.

7. Verfahren nach einem der vorhergehenden Patentansprüche,
**dadurch gekennzeichnet,**
**dass** die in Schritt c) übermittelten Zugangsparameter von dem Endgerät (EG1, EG2) gespeichert werden.

8. Verfahren nach einem der vorhergehenden Patentansprüche,
**dadurch gekennzeichnet,**
**dass** in Schritt d) die Anmeldung des Endgerätes (EG1, EG2) durch das Endgerät (EG1, EG2) selbst erfolgt.

9. Verfahren nach Patentanspruch 7 oder 8,
**dadurch gekennzeichnet,**
**dass** in Schritt c) die Zugangsparameter mehrerer Kommunikationsknoten (KN1, KN2) zu dem Endgerät (EG1, EG2) übermittelt werden, und
**dass** Schritt d) in den Fällen, in denen die Anmeldung des Endgeräts (EG1, EG2) bei einem ersten dieser Kommunikationsknoten (KN1, KN2) nicht erfolgreich verläuft, so lange bei weiteren Kommunikationsknoten (KN1, KN2), deren Zugangsparameter in Schritt c) gespeichert wurden, wiederholt wird, bis entweder eine erfolgreiche Anmeldung stattgefunden hat, oder alle mit Zugangsparametern von dem Endgerät (EG1, EG2) gespeicherten Kommunikationsknoten (KN1, KN2) abgearbeitet sind.

10. Verfahren nach Patentanspruch 9,
**dadurch gekennzeichnet,**
**dass** in den Fällen, in denen alle gespeicherten Kommunikationsknoten (KN1, KN2) abgearbeitet wurden und bei keinem dieser Kommunikationsknoten (KN1, KN2) eine erfolgreiche Anmeldung stattgefunden hat, das Verfahren beginnend mit Schritt b) wiederholt wird.

11. Verfahren nach einem der vorhergehenden Patentansprüche,
**gekennzeichnet durch**
folgenden zusätzlichen Verfahrensschritt:
e) Anmeldung des Endgerätes (EG1, EG2) an einem weiteren derjenigen Kommunikationsknoten, deren Zugangsparameter in Schritt c) übermittelt wurden, wenn der Kommunikationsknoten (KN1, KN2), an dem das Endgerät (EG1, EG2) bislang angemeldet ist, ausfällt.

12. Verfahren nach einem der vorhergehenden Patentansprüche,
**gekennzeichnet durch**,
die Anmeldung eines Benutzers an demjenigen Kommunikationsknoten (KN1, KN2), an dem das Endgerät (EG1, EG2) angemeldet ist.

13. Verfahren nach Patentanspruch 12,
**dadurch gekennzeichnet,**
**dass** an dem Kommunikationsknoten (KN1, KN2) verschiedene Benutzer mit unterschiedlichen Berechtigungen anmeldbar sind, dass in Schritt d) bei der Anmeldung des Endgerätes (EG1, EG2) zusätzlich der Benutzer dieses Endgerätes (EG1, EG2) bei dem Kommunikationsknoten (KN1, KN2) angemeldet wird,
**dass** ein Standard-Benutzer mit einer Standard-Berechtigung an dem Kommunikationsknoten (KN1, KN2) anmeldbar ist, und
**dass** das Endgerät (EG1, EG2) mit dem Standard-Benutzer bei dem Kommunikationsknoten (KN1, KN2) angemeldet ist, so lange kein anderer Benutzer über dieses Endgerät (EG1, EG2) an dem Kommunikationsknoten (KN1, KN2) angemeldet ist.

14. Anordnung zur Anmeldung eines Endgerätes (EG1, EG2) an einem Kommunikationsknoten (KN1, KN2) in einem Kommunikationsnetzwerk,
wobei in dem Kommunikationsnetzwerk ein Informationsspeicher (DB) angeordnet ist, in dem die Kommunikationsknoten (KN1, KN2) mit den jeweiligen Zugangsparametern registriert sind, dass das Endgerät (EG1, EG2) Mittel zum Zugriff auf den Informationsspeicher (DB) aufweist,
wobei die Zugangsparameter geeigneter Kommunikationsknoten (KN1, KN2) durch das Endgerät (EG1, EG2) aus dem Informationsspeicher (DB) abrufbar sind, und
wobei das Endgerät (EG1, EG2) Mittel zum Anmelden bei einem der geeigneten Kommunikationsknoten (KN1, KN2) anhand der Zugangsparameter aufweist,
**dadurch gekennzeichnet,**
**dass** in einem Speicherbereich des Informationsspeichers (DB) Angaben über mehrere Endgeräte (EG1, EG2) des Kommunikationsnetzwerks gespeichert sind,
**dass** ein Dienst vorgesehen ist, der zur Zuordnung der Endgeräte (EG1, EG2) zu den Kommunikationsknoten (KN1, KN2) anhand der in dem Informationsspeicher gespeicherten Angaben eingerichtet ist,
**dass** als Ergebnis der Zuordnung für jedes der Endgeräte (EG1, EG2) jeweils ein bevorzugter Kommunikationsknoten (KN1, KN2) bestimmt ist, und
**dass** die Endgeräte (EG1, EG2) zur Anmeldung bei dem jeweils zugeordneten bevorzugten Kommunikationsknoten (KN1, KN2) anhand der Zugangsparameter eingerichtet sind.

## Claims

1. Method for registering a terminal device (EG1, EG2) on a communications node (KN1, KN2) in a communications network,
whereby a plurality of communications nodes (KN1, KN2) are disposed in the communications network,
with the following method steps:
a) Registration of the communications nodes (KN1, KN2) and their access parameters in an information memory (DB),
b) Access of the terminal device (EG1, EG2) to the information memory (DB),
c) Transfer of the access parameters of at least one of the communications nodes (KN1, KN2) to the terminal device (EG1, EG2), and
d) Registration of the terminal device (EG1, EG2) using the obtained access parameters with one of these communications nodes (KN1, KN2),
**characterized in that** the relevant allocation of the terminal devices (EG1, EG2) to the communications nodes (KN1, KN2) is carried out by a service using the communications nodes (KN1, KN2) registered in the information memory (DB) in step a) and using the information relating to the terminal devices (EG1, EG2) stored in the memory area,
as a result of the allocation to each of the terminal devices (EG1, EG2), a preferred communications node (KN1, KN2) is defined in each case, and
the registration of the terminal devices (EG1, EG2) in step d) is then carried out in each case with the allocated preferred communications node (KN1, KN2).

2. Method according to Claim 1,
**characterized in that**
a voice data network is used as the communications network, and gatekeepers are used in each case as communications nodes (KN1, KN2).

3. Method according to Claim 2,
**characterized in that**
a voice data terminal device or a computer equipped with a telephony function is used as the terminal device (EG1, EG2).

4. Method according to one of the preceding claims,
**characterized in that**,
in step a), information relating to the communications protocols supported by the relevant communications node (KN1, KN2) and/or information relating to the number of total respective terminal devices (EG1, EG2) which can be registered are recorded as the access parameters.

5. Method according to one of the preceding claims,
**characterized in that**,
in step a), the access parameters comprise information relating to the number of terminal devices (EG1, EG2) which can currently be registered, and
this information is regularly transmitted from the communications node (KN1, KN2) in each case to the information memory (DB).

6. Method according to one of the preceding claims,
**characterized in that**,
in step b), a requirements profile of the terminal device (EG1, EG2) is transferred to the information memory (DB) during the access procedure and,
in step c), the access parameters of those communications nodes (KN1, KN2) which match the requirements profile are transferred from the information memory (DB) to the terminal device (EG1, EG2).

7. Method according to one of the preceding claims,
**characterized in that**
the access parameters transferred in step c) are stored by the terminal device (EG1, EG2).

8. Method according to one of the preceding claims,
**characterized in that**,
in step d), the registration of the terminal device (EG1, EG2) is carried out by the terminal device (EG1, EG2) itself.

9. Method according to Claim 7 or 8,
**characterized in that**,
in step c), the access parameters of a plurality of communications nodes (KN1, KN2) are transferred to the terminal device (EG1, EG2), and,
in those cases in which the registration of the terminal device (EG1, EG2) with a first of these communications nodes (KN1, KN2) is unsuccessful, step d) is repeated in further communications nodes (KN1, KN2) whose access parameters were stored in step c), until either a successful registration has taken place or all communications nodes (KN1, KN2) with access parameters stored by the terminal device (EG1, EG2) have been processed.

10. Method according to Claim 9,
**characterized in that**,
in cases in which all stored communications nodes (KN1, KN2) have been processed and successful registration has not taken place in any of these communications nodes (KN1, KN2), the method is repeated starting with step b).

11. Method according to one of the preceding claims,
**characterized by**
the following additional method step:
e) Registration of the terminal device (EG1, EG2) on a further of the communications nodes whose access parameters were transferred in step c) if the communications node (KN1, KN2) on which the terminal device (EG1, EG2) is currently registered fails.

12. Method according to one of the preceding claims,
**characterized by**
the registration of a user on the communications node (KN1, KN2) on which the terminal device (EG1, EG2) is registered.

13. Method according to Claim 12,
**characterized in that**
different users can be registered with different authorizations on the communications node (KN1, KN2),
in step d), when the terminal device (EG1, EG2) is registered, the user of this terminal device (EG1, EG2) is additionally registered with the communications node (KN1, KN2),
a standard user can be registered with a standard authorization on the communications node (KN1, KN2), and
the terminal device (EG1, EG2) is registered with the standard user on the communications node (KN1, KN2), provided that no other user is registered via this terminal device (EG1, EG2) on the communications node (KN1, KN2).

14. Arrangement for registering a terminal device (EG1, EG2) on a communications node (KN1, KN2) in a communications network,
in which an information memory (DB), in which the communications nodes (KN1, KN2) are registered with the relevant access parameters, is disposed in the communications network,
the terminal device (EG1, EG2) comprises means for accessing the information memory (DB),
in which the access parameters of suitable communications nodes (KN1, KN2) can be retrieved by the terminal device (EG1, EG2) from the information memory (DB), and
in which the terminal device (EG1, EG2) has means for registering with one of the suitable communications nodes (KN1, KN2) using the access parameters,
**characterized in that**
information relating to a plurality of terminal devices (EG1, EG2) of the communications network are stored in a memory area of the information memory (DB),
**in that** a service is provided which is designed to allocate the terminal devices (EG1, EG2) to the communications nodes (KN1, KN2) on the basis of the details stored in the information memory,
**in that** a preferred communications node (KN1, KN2) is in each case defined as the result of the allocation process for each of the terminal devices (EG1, EG2), and
**in that** the terminal devices (EG1, EG2) are designed to register with the respectively associated preferred communications node (KN1, KN2) on the basis of the access parameters.

## Revendications

1. Procédé pour l'enregistrement d'un terminal (EG1, EG2) sur un noeud de communication (KN1, KN2) dans un réseau de communication,
plusieurs noeuds de communication (KN1, KN2) étant agencés dans le réseau de communication,
avec les étapes suivantes :
a) enregistrement des noeuds de communication (KN1, KN2) et de leurs paramètres d'accès dans une mémoire d'informations (DB),
b) accès du terminal (EG1, EG2) à la mémoire d'informations (DB),
c) transmission des paramètres d'accès au moins de l'un des noeuds de communication (KN1, KN2) au terminal (EG1, EG2), et
d) enregistrement du terminal (EG1, EG2) à l'aide des paramètres d'accès obtenus auprès de l'un de ces noeuds de communication (KN1, KN2),
**caractérisé par le fait que**
- à l'aide des noeuds de communication (KN1, KN2) enregistrés dans l'étape a) dans la mémoire d'informations (DB) et à l'aide des indications mémorisées dans la zone de mémoire et concernant les terminaux (EG1, EG2), on effectue au moyen d'un service l'association respective des terminaux (EG1, EG2) aux noeuds de communication (KN1, KN2),
- en résultat de l'association, on détermine pour chacun des terminaux (EG1, EG2) un noeud de communication préféré (KN1, KN2), et
- dans l'étape d), on effectue l'enregistrement des terminaux (EG1, EG2) auprès du noeud de communication préféré associé (KN1, KN2).

2. Procédé selon la revendication 1,
**caractérisé par le fait que**
- on utilise comme réseau de communication un réseau de données vocales, et
- on utilise comme noeud de communication (KN1, KN2) à chaque fois un portier aussi appelé gatekeeper.

3. Procédé selon la revendication 2,
**caractérisé par le fait que** l'on utilise comme terminal (EG1, EG2) un terminal de données vocales ou un ordinateur équipé d'une fonction de téléphonie.

4. Procédé selon l'une des revendications précédentes,
**caractérisé par le fait que**, à l'étape a), on enregistre comme paramètres d'accès des indications sur les protocoles de communication supportés par le noeud de communication respectif (KN1, KN2) et/ou des indications sur le nombre des terminaux (EG1, EG2) pouvant être enregistrés au total.

5. Procédé selon l'une des revendications précédentes,
**caractérisé par le fait que**
- à l'étape a), les paramètres d'accès comprennent des indications sur le nombre des terminaux (EG1, EG2) pouvant être enregistrés actuellement, et
- ces indications sont transmises régulièrement par les noeuds de communication (KN1, KN2) à la mémoire d'informations (DB).

6. Procédé selon l'une des revendications précédentes,
**caractérisé par le fait que**
- à l'étape b), lors de l'accès, on transmet un profil de demande du terminal (EG1, EG2) à la mémoire d'informations (DB), et
- à l'étape c), on transmet de la mémoire d'informations (DB) au terminal (EG1, EG2) les paramètres d'accès de ceux des noeuds de communication (KN1, KN2) qui correspondent au profil de demande.

7. Procédé selon l'une des revendications précédentes,
**caractérisé par le fait que**
les paramètres d'accès transmis à l'étape c) sont mémorisés par le terminal (EG1, EG2).

8. Procédé selon l'une des revendications précédentes,
**caractérisé par le fait que**,
à l'étape d), l'enregistrement du terminal (EG1, EG2) est effectué par le terminal (EG1, EG2) lui-même.

9. Procédé selon la revendication 7 ou 8,
**caractérisé par le fait que**
- à l'étape c), on transmet les paramètres d'accès de plusieurs noeuds de communication (KN1, KN2) au terminal (EG1, EG2), et
- dans les cas dans lesquels l'enregistrement du terminal (EG1, EG2) auprès d'un premier noeud de communication (KN1, KN2) a échoué, on répète l'étape d) auprès d'autres noeuds de communication (KN1, KN2) dont les paramètres d'accès ont été mémorisés à l'étape c) soit jusqu'à ce qu'un enregistrement réussisse soit jusqu'à ce que tous les noeuds de communication (KN1, KN2) mémorisés avec des paramètres d'accès par le terminal (EG1, EG2) aient été traités.

10. Procédé selon la revendication 9,
**caractérisé par le fait que**,
dans les cas dans lesquels tous les noeuds de communication (KN1, KN2) ont été traités et aucun enregistrement n'a réussi auprès de ces noeuds de communication (KN1, KN2), on répète le procédé en commençant par l'étape b).

11. Procédé selon l'une des revendications précédentes,
**caractérisé par** l'étape supplémentaire suivante :
e) enregistrement du terminal (EG1, EG2) sur un autre des noeuds de communication dont les paramètres d'accès ont été transmis à l'étape c) lorsque le noeud de communication (KN1, KN2) sur lequel le terminal (EG1, EG2) était enregistré jusqu'alors tombe en panne.

12. Procédé selon l'une des revendications précédentes,
**caractérisé par**
l'enregistrement d'un utilisateur auprès du noeud de communication (KN1, KN2) auquel le terminal (EG1, EG2) est enregistré.

13. Procédé selon la revendication 12,
**caractérisé par le fait que**
- différents utilisateurs ayant différentes autorisations sont enregistrables sur le noeud de communication (KN1, KN2),
- à l'étape d), lors de l'enregistrement du terminal (EG1, EG2), l'utilisateur de ce terminal (EG1, EG2) est enregistré en plus auprès du noeud de communication (KN1, KN2),
- un utilisateur standard ayant une autorisation standard est enregistrable auprès du noeud de communication (KN1, KN2), et
- le terminal (EG1, EG2) avec l'utilisateur standard est enregistré auprès du noeud de communication (KN1, KN2) tant qu'aucun autre utilisateur n'est enregistré par l'intermédiaire de ce terminal (EG1, EG2) auprès du noeud de communication (KN1, KN2).

14. Dispositif pour l'enregistrement d'un terminal (EG1, EG2) sur un noeud de communication (KN1, KN2) dans un réseau de communication,
- une mémoire d'informations (DB) dans laquelle les noeuds de communication (KN1, KN2) avec les paramètres d'accès respectifs sont enregistrés étant agencée dans le réseau de communication,
- le terminal (EG1, EG2) comportant des moyens pour accéder à la mémoire d'informations (DB),
- les paramètres d'accès de noeuds de communication appropriés (KN1, KN2) étant interrogeables par le terminal (EG1, EG2) dans la mémoire d'informations (DB), et
- le terminal (EG1, EG2) comportant des moyens pour l'enregistrement auprès de l'un des noeuds de communication appropriés (KN1, KN2) à l'aide des paramètres d'accès,
**caractérisé par le fait que**
- des indications sur plusieurs terminaux (EG1, EG2) du réseau de communication sont mémorisées dans une zone de mémoire de la mémoire d'informations (DB),
- il est prévu un service qui est conçu pour l'association des terminaux (EG1, EG2) aux noeuds de communication (KN1, KN2) à l'aide des indications mémorisées dans la mémoire d'informations,
- en résultat de l'association, un noeud de communication préféré (KN1, KN2) est déterminé pour chacun des terminaux (EG1, EG2), et
- les terminaux (EG1, EG2) sont conçus pour l'enregistrement auprès du noeud de communication préféré respectivement associé (KN1, KN2) à l'aide des paramètres d'accès.
